# EUROPEAN PATENT SPECIFICATION

(11) **EP 0 750 815 B1**
(45) Date of publication and mention of the grant of the patent: **25.07.2007**
(21) Application number: 95913463.6
(22) Date of filing: 14.03.1995
(51) Int. Cl.: H04L 12/58, H04M 3/00

(54) **ELECTRONIC UNIT**
ELEKTRONISCHE EINHEIT
UNITE ELECTRONIQUE

(30) Priority: 14.03.1994 SE 9400852
(43) Date of publication of application: 02.01.1997
(73) Proprietor: SMD COMMUNICATION HB, 891 27 Örnsköldsvik (SE)
(72) Inventor: DAHLIN, Jan, S-907 38 Umeaa (SE)
(86) International application number: PCT/SE1995/000256
(87) International publication number: WO 1995/025395

(56) References cited:
- EP-A- 0 662 763
- US-A- 5 349 636

## Description

This invention relates to a separate electronic unit in pocket size, which can be directly connected to the public telephone net for being able to receive, store and transmit electronic mail and telefax messages.

### The background of the invention

The need of being able to communicate in an electronic way, i.e. electronic mail and telefax messages, is great today and increases strongly.

In this type of communication it is of great importance that the method of use can be simplified as far as possible, that it is a flexible solution, and that it is possible to get a relatively inexpensive product in order thereby to spread the use to people in general.

Electronic mail today means that a user is connected either via the public telephone net to a common server computer or to a so called data net with a server, i.e. a major computer serving as a mail station. When the user wants to receive or transmit electronic mail, he has to call up or in another way connect himself with the server computer and receive/transmit electronic mail to/from his own personal computer.

In order to be able to that the user must have a subscription with an operator supplying the service electronic mail. Today this is expensive and difficult for a novice partly to take a subscription, and partly to prepare his own personal computer for the use of electronic mail.

Telefax messages are today received essentially in the form of paper in spite of the fact that the personal computer has been developed as an information tool. Common telefax machines only receive and generate telefax messages in the form of paper. They do not store the telefax messages in an electronic way and due to that fact are neither intended to be called up from a remote computer via the public telephone net and be read off regarding incoming telefax messages.

There are, however, today personal computers with built-in telefax function. These ones function when sending as well as receiving telefax messages. The personal computer has all the time to be kept going and connected to the telephone jack when sending but also when receiving telefax messages, which makes that the use of a personal computer (with other words a portable personal computer) becomes limited. A stationary personal computer must also all the time be switched on for being able to receive telefax messages, since a telefax message in principle can come at any time. This type of computer consumes a relatively high amount of energy.

In order to simplify but at the same time make the handling of electronic mail as well as telefax messages in the electronic way more effective, it would be desirable with a small electronic unit, which is intended to handle electronic mail and telefax messages in the electronic way, and which besides that gives a solution consuming a low amount of energy.

The alternatives to this are as has been mentioned a connection with a major server computer for electronic mail and a traditional telefax handling in the form of paper or by means of a complete computer which is all the time activated for telefax handling.

### The object of the invention and the most important features

The object of the invention is to make the use of electronic mail simplier and to simplify the handling of telefax messages in an electronic way.

The invention is primarily directed to the so called domestic market for personal computers, and therefore it is important that the product is relatively inexpensive, that it is easy to use, at same time as it facilitates for the professional, mobile computer user who needs a "mail box" for incoming electronic mail and telefax messages, i.e. an electronic mail box which can be called up and be emptied of information independently of where the user is in the world.

This has been achieved by the fact that the two above mentioned functions (e-mail and telefax messages) have been integrated in a separate electronic unit in pocket size, so that each computer user can have an electronic mail box of his own which in a simple way can receive, store and be emptied of all form of electronic information at any time. The electronic unit can always be called up via a chosen telephone number (the same number for e-mail and telefax messages). At the same time the electronic unit can simply be moved between different telephone jacks/numbers. Moreover, due to its design the solution consumes a low amount of energy.

### Description of the drawing

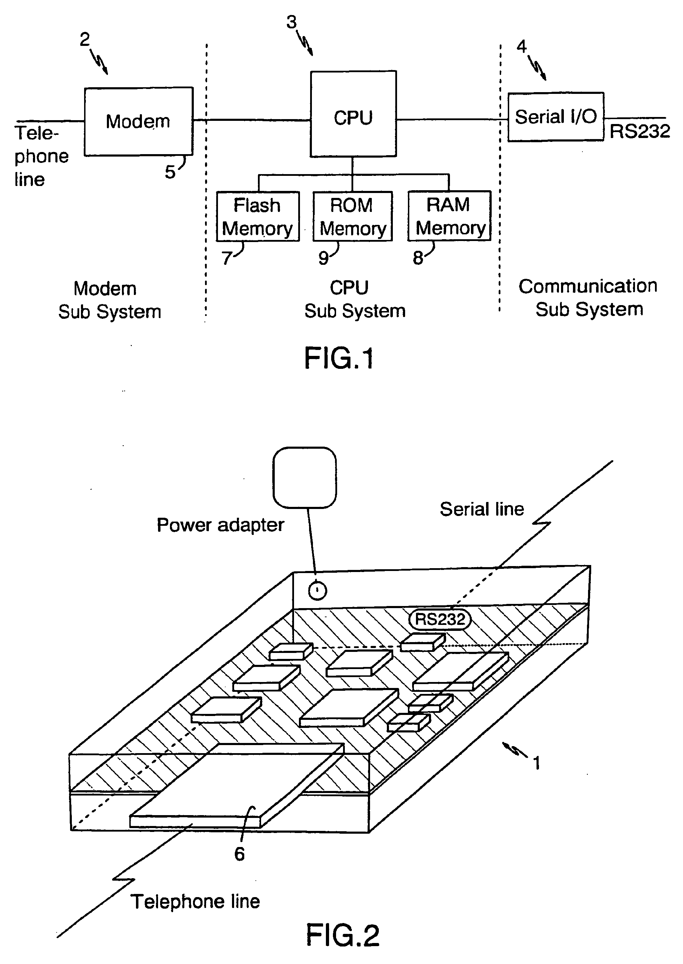

The invention shall be described more closely with reference to the accompanying drawing, where Fig 1 shows the three main parts which the electronic unit comprises, and Fig 2 shows an exploded sketch of the electronic unit.

### Construction

The construction of the electronic unit 1 is divided into the following three main parts:
a) A modem system 2, which constitutes an adaptation to the telephone line;
b) CPU-memory system 3, where the storing of the messages is made and which controls the tranmission and the reception of messages at a central level;
c) Communication system 4; the purpose of this system is that the user at place shall be able to connect his personal computer directly to electronic unit.

The electronic unit 1 comprises a small box, approx (2-3) x (9-10) x (10-15) cm and contains a printed circuit card with the following main components.

In order to communicate with the telephone line, there is required an adaptation with regard to the telephone line. This is made via a so called modem 5. In the electronic unit 1 this is made either by means of a PCMCIA-modem 6 in the size of a credit card for the best possible flexibility or by means of a built-in modem on the circuit card. The modem has a built-in telefax function which means that telefax messages are decoded/coded to a size which is possible to telefax.

A micro processor handles the storing of the messages in a memory area. In this case there is required a memory amount of at least 1 MB in order to be able to store a sufficiently large amount of messages. In the electronic unit 1 this memory amount can be graded up in a simple way. In order to store messages so called flash memory circuits 7 are used, i.e. a non-transient memory which gives the best possible function and security. RAM-memory 8 (Random Access Memory) stores data temporarily during code execution. In the ROM-memory (Read Only Memory) there are control instructions for the micro processor for handling of electronic mail and telefax messages among other things.

The invention also comprises a serial interface for direct communication between a connected personal computer and the electronic unit 1 in order that the messages shall be able to be collected and left. When messages are left the electronic unit 1 functions as a buffer and handles the transmission automatically. If the line is occupied, the unit will wait and then try again.

The soft ware being an integral part in the electronic unit 1 will be able to communicate with the most common telefax soft wares being available for personal computers.

## Claims

1. An apparatus for enabling independent receiving and storing of electronic mail and telefax messages in an electronic unit (1) in pocket size, being connected directly to the public telephone net to receive and store electronic mail and telefax messages, having built-in functions for transmitting electronic mail and telefax messages, being emptied of received telefax messages and electronic mail from a direct-connected or a distance computer, **characterized by** the combination of the following features, and whereby said electronic unit (1) is divided into the following three main parts:
a modem (5, 6) system, constituting an adaptation to said public telephone net;
a CPU-memory system (3), where said messages are stored, and which is adapted to control transmission and reception of messages at a central level in said unit (1), utilizing flash memory circuits (7) to store messages, Random Access Memory (8) for storing data temporarily during code execution, and Read Only Memory (9) comprising control instructions for said CPU handling electronic mail and telefax messages; and
a communication system (4) adapted to connect to a direct connected computer through a serial I/O interface or modem connection for direct communication between said connected computer and said electronic unit (1), whereby said messages are collected and left, wherein said electronic unit (1) is adapted to function as a buffer when messages are left.

## Patentansprüche

1. pparat zur Ermöglichung des unabhängigen Empfangs und der Lagerung von elektronischer Post und Telefax-Mitteilungen in einer elektronischen Einheit (1) im Taschenformat, die direkt an das öffentliche Telefonnetz angeschlossen wird, um elektronische Post und Telefax-Mitteilungen zu empfangen und zu lagern, mit eingebauten Funktionen zur Übertragung von elektronischer Post und Telefax-Mitteilungen und zur Abrufung von empfangenen Telefax-Mittelungen und elektronischer Post durch einen direktangeschlossenen oder entfernten Computer, **gekennzeichnet durch** die Kombination nachfolgend genannter Eigenschaften, wobei besagte elektronische Einheit (1) in folgende drei Hauptteile unterteilt ist:
ein Modem-System (5, 6), das die Anpassung an besagtes öffentliches Telefonnetz ermöglicht;
ein CPU-Speichersystem (3), das die besagten Mitteilungen speichert und so abgestimmt ist, dass es die Übertragung und den Empfang von Mitteilungen auf einer zentralen Eben in besagter Einheit (1) steuert, indem es Flash-Memory-Schaltkreise (7) zur Speicherung von Mitteilungen benutzt, Random Access Memory (8) zur vorübergehenden Speicherung von Daten während der Ausführung von Kodes sowie und Read Only Memory (9), das Steueranweisungen für besagte CPU- Handhabung von elektronischer Post und Telefax-Mitteilungen beinhaltet; und
ein Kommunikationssystem (4), angepasst für die Verbindung mit einem direktangeschlossenen Computer **durch** einen seriellen I/O-Grenzschnitt oder eine Modem-Verbindung für direkte Kommunikation zwischen besagtem angeschlossenen Computer und besagter elektronischer Einheit (1), wodurch besagte Mitteilungen gesammelt und abgegeben werden und wobei besagte elektronische Einheit (1) als Zwischenspeicher vorgesehen ist, wenn Mitteilungen abgegeben werden.

## Revendications

1. ppareil qui permet de manière indépendante la réception et le stockage de courriers électroniques et de messages télécopies dans une unité électronique (1) au format de poche, connectée directement au réseau téléphonique public pour recevoir et stocker ces courriers et messages, possédant des fonctions intégrées pour transmettre des courriers électroniques et messages télécopies, pouvant vider les messages télécopies et courriers électroniques reçus vers un ordinateur connecté soit directement, soit à distance, et **caractérisée par** la combinaison des trois dispositifs suivants qui forment l'unité électronique (1) :
un système de modem (5, 6), permettant la connexion au réseau téléphonique public ;
un système de mémoire d'unité centrale de traitement (3), où les messages sont stockés, et qui est conçu pour contrôler la transmission et la réception des messages à un niveau central dans l'unité électronique (1), utilisant des circuits de mémoire flash (7) pour stocker les messages, une mémoire vive (MEV) (8) pour le stockage temporaire des données pendant l'exécution du code, et une mémoire morte (MEM) (9) comprenant les instructions de contrôle pour le traitement par l'UC des courriers électroniques et des messages télécopies ; et
un système de communication (4) permettant la connexion à un ordinateur à travers une interface d'entrée-sortie séquentielle, ou une connexion modem pour une communication directe entre l'ordinateur connecté et l'unité électronique (1), les messages étant ainsi récupérés et laissés, et l'unité électronique (1) ainsi adaptée pour fonctionner comme tampon dans le cas où des messages sont laissés.
